# EUROPÄISCHE PATENTANMELDUNG

(11) **EP 1 186 810 A2**
(43) Veröffentlichungstag der Anmeldung: **13.03.2002**
(21) Anmeldenummer: 01890250.2
(22) Anmeldetag: 30.08.2001
(51) Int. Cl.: F16J 15/06

(54) **Verfahren und eine Einrichtung zur Eckabdichtung eines Bauteiles**

(30) Priorität: 06.09.2000 AT 15192000
(71) Anmelder: DFT Maschinenbau GmbH, 4550 Kremsmünster (AT)
(72) Erfinder: Prenninger, Jürgen, 4591 Molln (AT)
(74) Vertreter: Babeluk, Michael, Dipl.-Ing. Mag.

(57) **Zusammenfassung**

Die Erfindung betrifft ein Verfahren und eine Einrichtung zur Eckabdichtung eines Bauteiles (1), insbesondere zur Dichtheitsprüfung, welcher Bauteil (1) zumindest einen offenen Hohlraum (14) aufweist, der über zumindest zwei zu einer gemeinsamen Kante (4) des Bauteiles (1) hin offene Dichtflächen (2, 3) gegenüber zumindest zwei Anschlussteilen (5, 6) abgedichtet wird. Mindestens ein offenes Ende (10a) der einen offenen Grundriss aufweisenden ersten Dichtung (10) ragt im gequetschten Zustand im Bereich der Kante (4) über eine zweite Dichtfläche (3) des Bauteiles (1) hinaus. Gegen dieses offene Ende (10a) wird stirnseitig eine zwischen der zweiten Dichtfläche (3) und dem zweiten Anschlussteil (6) angeordnete zweite Dichtung (3) gepresst. Damit kann auf einfache Weise eine sichere Abdichtung des Bauteiles (1) erreicht werden.

## Beschreibung

Die Erfindung betrifft ein Verfahren und eine Einrichtung zur Eckabdichtung eines Bauteiles, insbesondere zur Dichtheitsprüfung, welcher Bauteil zumindest einen offenen Hohlraum aufweist, der über zumindest zwei zu einer gemeinsamen Kante des Bauteiles hin offene Dichtflächen gegenüber zumindest zwei Anschlussteilen abgedichtet wird.

Maschinenbauteile, wie beispielsweise Kurbelgehäuse, Zylinderköpfe oder dergleichen weisen häufig zur Oberfläche hin offene Hohlräume mit Dichtflächen auf, die innerhalb einer Ebene nicht geschlossen sind, sondern über eine Kante weiter in eine zweite Dichtfläche verlaufen. Der Winkel zwischen diesen beiden Dichtflächen beträgt in der Regel 90°. Die Abdichtung derartiger Dichtflächen, beispielsweise zur Dichtheitsprüfung, ist problematisch und aufwendig und erfordert mitunter spezielle Lösungen. Bei der Dichtheitsprüfung von Bauteilen stellt sich die zusätzliche Forderung, dass die Abdichtung des Bauteiles möglichst durch Werkzeugbewegungen in Hauptzustellrichtungen erfolgen soll und dass Dichtungseinrichtungen mit hoher Standzeit für eine möglichst große Zahl an zu prüfenden Bauteilen mit zuverlässiger Abdichtung verwendet werden sollen.

Aufgabe der Erfindung ist es, auf möglichst einfache Weise eine sichere Eckabdichtung eines Bauteiles zu ermöglichen.

Erfindungsgemäß wird dies mit folgenden Schritten erreicht:
a. Anordnen einer ersten Dichtung mit offenem Grundriss zwischen einer ersten Dichtfläche des Bauteiles und einem ersten Anschlussteil, wobei zumindest ein offenes Ende der ersten Dichtung im Bereich einer zweiten Dichtfläche des Bauteiles und/oder einer an die zweite Dichtfläche des Bauteiles anschließenden Anschlussfläche des ersten Anschlussteiles positioniert wird,
b. Aneinanderpressen des Bauteiles und des ersten Anschlussteiles, wobei die Anschlussfläche mit der zweiten Dichtfläche des Bauteiles fluchtet, und wobei die erste Dichtung so gequetscht wird, dass das offene Ende der Dichtung im gequetschten Zustand zumindest teilweise über die zweite Dichtfläche und/oder die Anschlussfläche hinausragt,
c. Anordnen einer zweiten Dichtung zwischen der zweiten Dichtfläche des Bauteiles und einem zweiten Anschlussteil,
d. Aneinanderpressen des zweiten Anschlussteiles und des Bauteiles, wobei die zwischen der zweiten Dichtfläche des Bauteiles und dem zweiten Anschlussteil liegende zweite Dichtung gegen die Stirnseite des offenen Endes der ersten Dichtung gepresst wird.

Es wird somit in ersten Verfahrensschritten die erste Dichtung zwischen der ersten Dichtfläche des Bauteiles und des ersten Anschlussteiles angeordnet und gepresst. Wesentlich ist, dass im gequetschten Zustand das offene Ende der ersten Dichtung über die Kante der angrenzenden zweiten Dichtfläche ragt. An der Stirnseite des überragenden offenen Endes der ersten Dichtung wird sodann in weiteren Schritten durch den zweiten Anschlussteil eine zweite Dichtung angepresst. Dadurch wird der Hohlraum des Bauteiles sowohl gegen den ersten, als auch gegen den zweiten Anschlussteil sicher abgedichtet.

Vorzugsweise ist vorgesehen, dass im ungepressten Zustand die erste Dichtung mit der zweiten Dichtfläche und/oder der Anschlussfläche des ersten Anschlussteiles fluchtend zwischen Bauteil und dem ersten Anschlussteil angeordnet wird.

Wenn die erste und die zweite Dichtung in jeweils eigenen Dichtungsnuten des ersten bzw. zweiten Anschlussteiles angeordnet werden, kann während des Anpressvorganges erreicht werden, dass die Anschlussteile am Bauteil anliegen. Dies ist besonders für die Durchführung von automatischen Dichtheitsprüfungen von einer größeren Anzahl von Bauteilen von Vorteil, da auf die Dichtungen immer der gleiche Anpressdruck wirkt. Dies wird insbesondere dadurch möglich, dass die erste Dichtung und/oder die zweite Dichtung im gequetschten Zustand zumindest überwiegend, vorzugsweise zur Gänze von der ersten Dichtungsnut bzw. der zweiten Dichtungsnut aufgenommen wird. Besonders günstig ist es, wenn die erste Dichtungsnut und/oder die zweite Dichtungsnut als Schwalbenschwanznut ausgebildet wird. Die Breite der offenen Enden der ersten Dichtung ist vorzugsweise größer als die Breite der zweiten Dichtung im Berührungsbereich der beiden Dichtungen. Auch ist der Querschnitt der Dichtungsnut der ersten Dichtung an den offenen Enden für etwa 10-20 mm gleich dem Querschnitt der unbelasteten Dichtung, dies bewirkt, dass das Dichtungsende im belasteten Zustand sich nur in der Länge verformt und somit einen definierten Überstand an der zweiten Dichtfläche gewährleistet.

Besonders vorteilhaft ist es, wenn die zweite Dichtung als geschlossene Dichtung ausgebildet und teilweise zwischen dem ersten Anschlussteil und dem zweiten Anschlussteil angeordnet und durch den zweiten Anschlussteil gegen den ersten Anschlussteil gepresst wird. Dies ermöglicht eine zuverlässige Abdichtung des zweiten Anschlussteiles gegenüber dem Bauteil und dem ersten Anschlussteil.

Die Dichtungen werden zweckmäßigerweise als Formdichtung mit einem rechteckigem Querschnitt gestaltet. Dadurch lässt sich insbesondere eine zuverlässige Abdichtung von ebenen Dichtungsflächen erreichen.

Aber auch bei unebenen, insbesondere gekrümmten Dichtflächen lässt sich eine sichere Abdichtung bewirken. Dies wird insbesondere dann möglich, wenn die zweite Dichtungsfläche und die Anschlussfläche des ersten Anschlussteiles jeweils als Mantelsegment eines Rotationskörpers, vorzugsweise eines Zylinders, geformt werden, wobei sich die zweite Dichtfläche und die Anschlussfläche zu einer vorzugsweise zylindrischen Bohrung ergänzen. Dabei ist vorzugsweise vorgesehen, dass der zweite Anschlussteil durch einen Aufspreizdorn gebildet wird, welcher nach Aneinanderpressen des Bauteiles und des ersten Anschlussteiles mit der zweiten Dichtung versehen in die Bohrung eingeführt und gegen die zweite Dichtfläche des Bauteiles, sowie gegen die Anschlussfläche des ersten Anschlussteiles gepresst wird. In dieser Ausführung ist die zweite Dichtung zweckmäßigerweise als O-Ring ausgebildet, welcher durch den Aufspreizdorn gegen die gekrümmte erste Dichtfläche und die Stirnfläche des offenen Endes der ersten Dichtung gepresst wird.

Auf diese Weise lassen sich auch offene bzw. halbierte Bohrungen im Bauteil sicher abdichten. Die erste Dichtfläche schneidet die Bohrung dabei an zwei Kanten. Um die Bohrungsfläche abzudichten wird die zweite Bohrungshälfte im Anschlussteil vervollständigt. Die erste eben ausgeführte Dichtung wird zwischen Bauteil und erstem Anschlussteil gequetscht, wobei im gequetschten Zustand das offene Ende der ersten Dichtung in die durch Bauteil und Anschlussteil gebildete Bohrung hineinragt. Anschließend erfolgt die Bohrungsabdichtung mittels der als O-Ring ausgeführten zweiten Dichtung, welche mit dem Aufspreizdorn gegen die erste Dichtfläche im Bauteil und gegen die Stirnseite des offenen Endes der ersten Dichtung gepresst wird.

Die Erfindung wird im Folgenden anhand der Figuren näher erläutert. Es zeigen schematisch
- Fig. 1: einen mit dem erfindungsgemäßen Verfahren abzudichtenden Bauteil,
- Fig. 2: den Bauteil in einer Ansicht gemäß der Linie II - II in Fig. 1,
- Fig. 3: den Bauteil samt Anschlussteil in einem Schnitt gemäß der Linie III-III in Fig. 1 und Fig. 2 in vergrößerter Darstellung und
- Fig. 4: einen weiteren mit dem erfindungsgemäßen Verfahren abzudichtenden Bauteil.

In den Ausführungsbeispielen sind funktionsgleiche Bauteile mit gleichen Bezugszeichen versehen.

Der in den Figuren dargestellte Bauteil 1 weist zumindest einen offenen Hohlraum 14 auf und stellt den Prüfteil bei einer Dichtheitsprüfung dar. Der Prüfteil kann beispielsweise ein Kurbelgehäuse oder ein Zylinderkopf einer Brennkraftmaschine sein. Bei einem Kurbelgehäuse etwa muss der gesamte Kurbelraum bei der Dichtheitsprüfung abgedichtet werden.

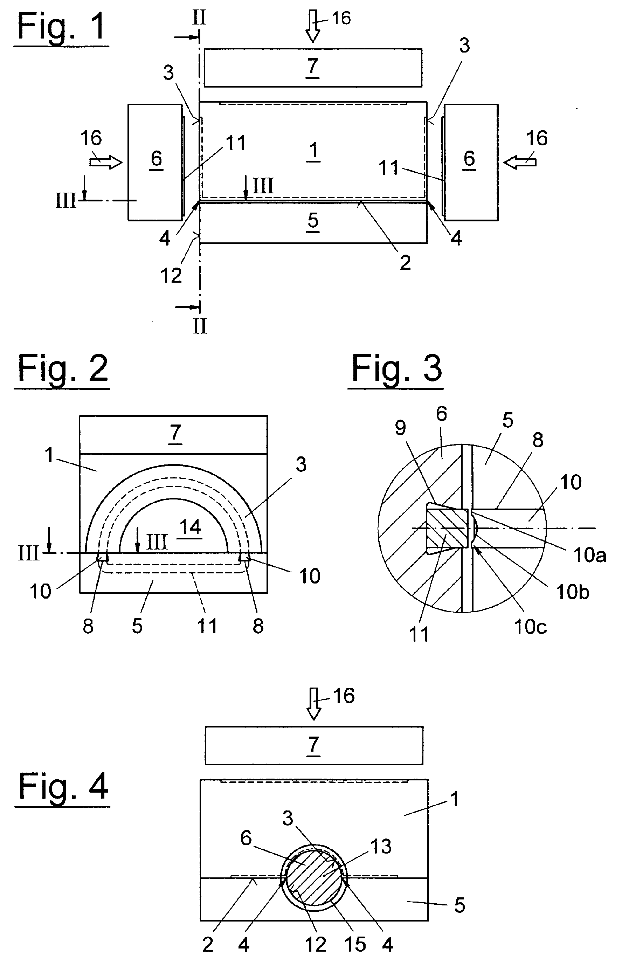

Die Dichtflächen 2, 3 sind in den Figuren 1 und 4 mit strichlierten Linien markiert. Die erste Dichtfläche 2 läuft dabei über eine Kante 4 in eine zweite Dichtfläche 3. Der Winkel zwischen der ersten Dichtfläche 2 und der zweiten Dichtfläche 3 beträgt im Bereich der Kante 4 etwa 90°.

Im in den Fig. 1 bis 3 dargestellten Ausführungsbeispiel werden die Dichtflächen 2, 3 durch ebene Flächen gebildet. Mit Bezugszeichen 5 ist ein erster Anschlussteil, mit Bezugszeichen 6 zweite Anschlussteile und mit Bezugszeichen 7 ein weiterer Anschlussteil bezeichnet. Die Anschlussteile 5, 6 und 7 werden im vorliegenden Fall durch die Dichtungswerkzeuge einer Dichtprüfmaschine gebildet. Der erste Anschlussteil 5 ist dabei ruhend, die zweiten Anschlussteile 6, sowie der weitere Anschlussteil 7 beweglich ausgebildet. Die Bewegungsrichtung der Dichtungswerkzeuge während des Abdicht- und Anpressvorganges an den Bauteil 1 ist durch die Pfeile 16 angedeutet. Zumindest der erste Anschlussteil 5 und die zweiten Anschlussteile 6 weisen jeweils durch Schwalbenschwanznuten gebildete erste Dichtungsnuten 8 und zweite Dichtungsnuten 9 auf, in welchen eine erste Dichtung 10 bzw. zweite Dichtung 11 angeordnet ist. Erste und zweite Dichtung 10, 11 sind als Dichtungen mit rechteckigem Querschnitt ausgebildet und bestehen beispielsweise aus wasserstrahlgeschnittenem Polyurethan. In Fig. 2 ist die Lage der zweiten Dichtung 11 strichliert eingezeichnet.

Der Bauteil 1 wird auf den die erste Dichtung 10 aufweisenden ersten Anschlussteil 5 gelegt und mittels des weiteren Anschlussteiles 7 angepresst. Die erste Dichtung 10 ist dabei als Dichtung mit offenem Grundriss ausgeführt, wobei zumindest ein offenes Ende 10a im Bereich der Kante 4 positioniert ist. Die Stirnseite 10b des offenen Endes 10a kann dabei fluchtend mit der zweiten Dichtfläche 3 des Bauteiles 1 bzw. mit der Anschlussfläche 12 des ersten Anschlussteiles 5 angeordnet sein. Während des Anpressvorganges des Bauteiles 1 an den ersten Anschlussteil 5 wird die erste Dichtung 10 gequetscht. Das offene Ende 10a der Dichtung 10 wird dadurch teilweise in gequetschtem Zustand stirnseitig aus der Dichtungsnut 8 gedrängt, wodurch Dichtungslappen 10c über die Kante 4, das heißt über die zweite Dichtfläche 3 des Bauteiles 1 und/oder die Anschlussfläche 12 des ersten Anschlussteiles 5, hinausragen.

Anschließend werden die zweiten Anschlussteile 6 mit dem in die Dichtungsnuten 9 eingelegten zweiten Dichtungen 11 auf den ersten Bauteil 1 und den Anschlussteil 5 gepresst, wobei die zweite Dichtung 11 stirnseitig am offenen Ende 10a der ersten Dichtung 10 anliegt und gegen die Dichtungslappen 10c gedrückt wird. Die sowohl an der ersten Dichtfläche 3, als auch auf der Anschlussfläche 12 und der ersten Dichtung 10 aufliegende, einen geschlossenen Grundriss aufweisende zweite Dichtung 11 dichtet somit den zweiten Anschlussteil 6 gegenüber dem Bauteil 1 und dem ersten Anschlussteil 5 sicher ab.

Alternativ zu einer Formdichtung kann die zweite Dichtung 9 auch als O-Ring ausgebildet sein.

Nach der Abdichtung des Bauteiles 1 kann die Dichtheitsprüfung in bekannter Weise durchgeführt werden. Nach erfolgter Dichtheitsprüfung werden die Anschlussteile 5, 6 und 7 in umgekehrter Reihenfolge vom Bauteil 1 entfernt, worauf die Abdichtung und Dichtheitsprüfung beim nächsten Bauteil durchgeführt werden kann.

Fig. 4 zeigt die Abdichtsituation bei einem weiteren Bauteil 1, bei dem die zweite Dichtfläche 3 - zum Unterschied zu Fig. 1 - durch eine gekrümmte Fläche gebildet ist. Eine solche gekrümmte Fläche entsteht bei offenen bzw. halbierten Bohrungen, beispielsweise der Kurbelwellenbohrung eines Kurbelgehäuses. Die erste Dichtfläche 2 des Bauteiles 1 schneidet somit die zweite zylindrische oder kegelige Dichtfläche 3 an zwei Kanten 4.

Um die zweite Dichtfläche 3 abzudichten, wird die zweite Bohrungshälfte im ersten Anschlussteil 5 vervollständigt, so dass die zweite Dichtfläche 3 des Bauteiles 1 und die Anschlussfläche 12 des ersten Anschlussteiles 5 eine geschlossene Mantelfläche eines Drehkörpers, beispielsweise eines Zylinders oder Kegels, bilden und sich somit zu einer Bohrung 15 ergänzen.

Der erste Anschlussteil 5 weist analog zum ersten Ausführungsbeispiel schwalbenschwanzförmige Dichtungsnuten 8 auf, in welche erste Dichtungen 10 mit offenen Enden 10a im Bereich der Kanten 4 angeordnet sind. Die Stirnseiten 10b der offenen Enden 10a sind fluchtend mit der zweiten Dichtfläche 3 bzw. mit der Anschlussfläche 12 ausgebildet. Nach Positionierung des Bauteiles 1 am Anschlussteil 5 werden über den weiteren Anschlussteil 7 Bauteil 1 und erster Anschlussteil 5 aneinandergepresst, wobei die sich in der ersten Dichtungsnut 8 befindende erste Dichtung 10 gequetscht wird. Das offene Ende 10a der ersten Dichtung 10 wird dabei stirnseitig in Richtung der Bohrung 15 verdrängt, wodurch Dichtungslappen 10c über die zweite Dichtfläche 3 bzw. über die Anschlussfläche 12 hinaus in die Bohrung 15 hineinragen.

Anschließend erfolgt die Bohrungsabdichtung durch den als Aufspreizdorn 13 ausgebildeten zweiten Anschlussteil 6 mittels einer als O-Ring ausgebildeten zweiten Dichtung 11. Der Aufspreizdorn 13 wird in der Bohrung 15 positioniert und sodann der O-Ring mittels des Aufspreizdornes 13 gegen die Dichtungslappen 10c der ersten Dichtung 10, die zweite Dichtfläche 3 und die Anschlussfläche 12 gepresst. Auf diese Weise kann eine sichere Abdichtung des Hohlraumes 14 innerhalb des Bauteiles 1 gegenüber der Umgebung erreicht werden. Die Anordnung ist somit bereit zur Durchführung der Dichtheitsprüfung, welche nicht mehr Gegenstand der Erfindung ist. Nach der Dichtheitsprüfung werden die Anschlussteile 5, 6 und 7 analog in umgekehrter Reihenfolge entfernt.

Die in der beschriebenen Weise durchgeführte Abdichtung des Bauteiles 1 hat den Vorteil, dass jeder Bauteil für sich - ohne angrenzende Bauteile - auf Dichtheit geprüft werden kann. Bisher mussten beispielsweise Kurbelgehäuse vor der Dichtheitsprüfung zusammen mit angrenzenden Gehäuseteilen bearbeitet und nachher gemeinsam auf Dichtheit geprüft werden. Dies hatte aber den Nachteil, dass bei einer eventuell festgestellten Undichtheit alle zusammen bearbeiteten Gehäuseteile ausgeschieden werden mussten. Mit dem beschriebenen Verfahren hingegen muss nur jener Gehäuseteil ausgeschieden werden, der tatsächlich fehlerhaft ist. Erst nach erfolgter Dichtheitsprüfung werden intakte aneinandergrenzende Gehäuseteile zusammen bearbeitet.

## Patentansprüche

1. Verfahren zur Eckabdichtung eines Bauteiles (1), insbesondere zur Dichtheitsprüfung, welcher Bauteil (1) zumindest einen offenen Hohlraum (14) aufweist, der über zumindest zwei zu einer gemeinsamen Kante (4) des Bauteiles (1) hin offene Dichtflächen (2, 3) gegenüber zumindest zwei Anschlussteilen (5, 6) abgedichtet wird, mit folgenden Schritten:
a) Anordnen einer ersten Dichtung (10) mit offenem Grundriss zwischen einer ersten Dichtfläche (2) des Bauteiles (1) und einem ersten Anschlussteil (5), wobei zumindest ein offenes Ende (10a) der ersten Dichtung (10) im Bereich einer zweiten Dichtfläche (3) des Bauteiles (1) und/oder einer an die zweite Dichtfläche (3) des Bauteiles (1) anschließenden Anschlussfläche (12) des ersten Anschlussteiles (5) positioniert wird,
b) Aneinanderpressen des Bauteiles (1) und des ersten Anschlussteiles (5), wobei die Anschlussfläche (12) mit der zweiten Dichtfläche (3) des Bauteiles (1) fluchtet, und wobei die erste Dichtung (2) so gequetscht wird, dass das offene Ende (10a) der Dichtung (10) im gequetschten Zustand zumindest teilweise über die zweite Dichtfläche (3) und/oder die Anschlussfläche (12) hinausragt,
c) Anordnen einer zweiten Dichtung (11) zwischen der zweiten Dichtfläche (3) des Bauteiles (1) und einem zweiten Anschlussteil (6),
d) Aneinanderpressen des zweiten Anschlussteiles (6) und des Bauteiles (1), wobei die zwischen der zweiten Dichtfläche (3) des Bauteiles (1) und dem zweiten Anschlussteil (6) liegende zweite Dichtung (11) gegen die Stirnseite (10b) des offenen Endes (10a) der ersten Dichtung (2) gepresst wird.

2. Verfahren nach Anspruch 1, **dadurch gekennzeichnet, dass** im ungepressten Zustand die erste Dichtung (2) mit der zweiten Dichtfläche (3) und/oder der Anschlussfläche (12) des ersten Anschlussteiles (5) fluchtend zwischen Bauteil (1) und dem ersten Anschlussteil (5) angeordnet wird.

3. Verfahren nach Anspruch 1 oder 2, **dadurch gekennzeichnet, dass** die erste Dichtung (2) in einer ersten Dichtungsnut (8) des ersten Anschlussteiles (5) angeordnet wird.

4. Verfahren nach einem der Ansprüche 1 bis 3, **dadurch gekennzeichnet, dass** die zweite Dichtung (11) in einer zweiten Dichtungsnut (9) des zweiten Anschlussteiles (6) angeordnet wird.

5. Verfahren nach einem der Ansprüche 3 oder 4, **dadurch gekennzeichnet, dass** die erste Dichtung (10) und/oder die zweite Dichtung (11) im gequetschten Zustand zumindest überwiegend, vorzugsweise zur Gänze von der ersten Dichtungsnut (8) bzw. der zweiten Dichtungsnut (9) aufgenommen wird.

6. Verfahren nach einem der Ansprüche 3 bis 5, **dadurch gekennzeichnet, dass** die erste Dichtungsnut (8) und/oder die zweite Dichtungsnut (9) als Schwalbenschwanznut ausgebildet wird.

7. Verfahren nach einem der Ansprüche 1 bis 6, **dadurch gekennzeichnet, dass** die zweite Dichtung (11) als geschlossene Dichtung ausgebildet und teilweise zwischen dem ersten Anschlussteil (5) und dem zweiten Anschlussteil (6) angeordnet und durch den zweiten Anschlussteil (6) gegen den ersten Anschlussteil (5) gepresst wird.

8. Verfahren nach einem der Ansprüche 1 bis 7, **dadurch gekennzeichnet, dass** die erste Dichtung (10) durch eine Formdichtung gebildet wird.

9. Verfahren nach einem der Ansprüche 1 bis 8, **dadurch gekennzeichnet, dass** die zweite Dichtung (11) durch eine Formdichtung gebildet wird.

10. Verfahren nach einem der Ansprüche 1 bis 8, **dadurch gekennzeichnet, dass** die zweite Dichtung (11) durch eine O-Ringdichtung gebildet wird.

11. Verfahren nach einem der Ansprüche 1 bis 10, **dadurch gekennzeichnet, dass** die zweite Dichtungsfläche (3) und die Anschlussfläche (12) des ersten Anschlussteiles (5) jeweils als Mantelsegment eines Rotationskörpers, vorzugsweise eines Zylinders, geformt werden, wobei sich die zweite Dichtfläche (3) und die Anschlussfläche (12) zu einer vorzugsweise zylindrischen Bohrung (15) ergänzen.

12. Verfahren nach Anspruch 11, **dadurch gekennzeichnet, dass** der zweite Anschlussteil (6) durch einen Aufspreizdorn (13) gebildet wird, welcher nach Aneinanderpressen des Bauteiles (1) und des ersten Anschlussteiles (5) mit der zweiten Dichtung (11) versehen in die Bohrung (15) eingeführt und gegen die zweite Dichtfläche (3) des Bauteiles (1), sowie gegen die Anschlussfläche (12) des ersten Anschlussteiles (5) gepresst wird.

13. Einrichtung zur Eckabdichtung eines Bauteiles (1), insbesondere zur Dichtheitsprüfung, welcher Bauteil (1) zumindest einen offenen Hohlraum (14) aufweist, der über zumindest zwei zu einer gemeinsamen Kante (4) des Bauteiles (1) hin offenen Dichtflächen (2, 3) gegenüber zumindest zwei Anschlussteilen (5, 6) abgedichtet ist, wobei der Bauteil (1) und ein erster Anschlussteil (5) mit einer dazwischen liegenden ersten Dichtung (10) aneinandergepresst sind, **dadurch gekennzeichnet, dass** zumindest ein offenes Ende (10a) der einen offenen Grundriss aufweisenden ersten Dichtung (10) im gequetschten Zustand im Bereich der Kante (4) über eine zweite Dichtfläche (3) des Bauteiles (1) und/oder eine Anschlussfläche (12) des ersten Anschlussteiles (5) hinausragt und gegen dieses offene Ende (10a) stirnseitig eine zwischen der zweiten Dichtfläche (3) und dem zweiten Anschlussteil (6) angeordnete zweite Dichtung (11) gepresst ist.

14. Einrichtung nach Anspruch 13, **dadurch gekennzeichnet, dass** die erste Dichtung (10) in einer vorzugsweise als Schwalbenschwanznut ausgebildeten ersten Dichtungsnut (8) des ersten Anschlussteiles (5) angeordnet ist, wobei besonders vorzugsweise die Querschnittsfläche der ersten Dichtungsnut (8) mindestens der Querschnittsfläche der ersten Dichtung (10) entspricht.

15. Einrichtung nach Anspruch 13 oder 14, **dadurch gekennzeichnet, dass** die zweite Dichtung (11) als geschlossene Dichtung ausgebildet ist.

16. Einrichtung nach einem der Ansprüche 13 bis 15, **dadurch gekennzeichnet, dass** die erste Dichtung (10) als Formdichtung mit einem vorzugsweise rechteckigen Querschnitt ausgebildet ist.

17. Einrichtung nach einem der Ansprüche 13 bis 16, **dadurch gekennzeichnet, dass** die zweite Dichtung (11) als Formdichtung mit einem vorzugsweise rechteckigen Querschnitt ausgebildet ist.

18. Einrichtung nach einem der Ansprüche 13 bis 16, **dadurch gekennzeichnet, dass** die zweite Dichtung (11) durch einen O-Ring gebildet ist.

19. Einrichtung nach einem der Ansprüche 13 bis 18, **dadurch gekennzeichnet, dass** die erste Dichtfläche (2) und die zweite Dichtfläche (3) im Bereich der Kante (4) im Wesentlichen orthogonal zueinander ausgebildet sind.

20. Einrichtung nach einem der Ansprüche 13 bis 19, **dadurch gekennzeichnet, dass** die erste Dichtfläche (2) und/oder die zweite Dichtfläche (3) eben ausgebildet sind.

21. Einrichtung nach einem der Ansprüche 13 bis 19, **dadurch gekennzeichnet, dass** die zweite Dichtfläche (3) und die Anschlussfläche (12) als Mantelsegmente eines Drehkörpers, vorzugsweise eines Zylinders, ausgebildet sind, wobei sich die zweite Dichtfläche (3) und die erste Anschlussfläche (12) zu einer vorzugsweise zylindrischen Bohrung (15) ergänzen.

22. Einrichtung nach Anspruch 21, **dadurch gekennzeichnet, dass** der zweite Anschlussteil (6) als kegeliger oder zylindrischer Aufspreizdorn (13) ausgebildet ist.
